# EUROPÄISCHE PATENTSCHRIFT

(11) **EP 4 214 724 B1**
(45) Veröffentlichungstag und Bekanntmachung des Hinweises auf die Patenterteilung: **23.04.2025**
(21) Anmeldenummer: 21835715.0
(22) Anmeldetag: 10.12.2021
(51) Int. Cl.: H01C 7/12, H01T 1/14

(54) **ANORDNUNG AUFWEISEND EINE TRENNEINRICHTUNG FÜR EINE ÜBERSPANNUNGSABLEITEINRICHTUNG**
ASSEMBLY COMPRISING A DISCONNECTING DEVICE FOR A SURGE-ARRESTING DEVICE
SYSTÈME COMPRENANT UN DISPOSITIF DE SÉPARATION POUR UN DISPOSITIF DE PROTECTION CONTRE LES SURTENSIONS

(30) Priorität: 06.01.2021 CN 202110011479
(43) Veröffentlichungstag der Anmeldung: 26.07.2023
(60) Teilanmeldung: 23209758.4
(73) Patentinhaber: Siemens Energy Global GmbH & Co. KG, 81739 München (DE)
(72) Erfinder: KRUSKA, Bernd, 14059 Berlin (DE); LIU, Bi Xue, Wuxi, Jiangsu (CN); PETCHANKA, Arkadz, 13599 Berlin (DE); REICHERT, Frank, 06667 Weißenfels (DE); RÖSSLER, Ralf, 13127 Berlin (DE)
(86) Internationale Anmeldenummer: PCT/EP2021/085153
(87) Internationale Veröffentlichungsnummer: WO 2022/148599

(56) Entgegenhaltungen:
- DE-A1- 102007 012 296
- DE-A1- 102018 215 830

## Beschreibung

Die Erfindung betrifft eine Anordnung aufweisend eine Trenneinrichtung für eine Überspannungsableiteinrichtung, aufweisend ein erstes Kontaktmittel sowie eine zweites Kontaktmittel, zwischen welchen ein erster Pfad, ein thermisch auslösbares Schaltelement aufweisend, angeordnet ist.

Eine derartige Anordnung ist beispielsweise aus der internationalen Veröffentlichung WO 2018/188 897 bekannt. Dort ist eine Abtrennung- und Umschaltvorrichtung beschrieben, welche eine sogenannte thermische Abtrennstelle aufweist. Die thermische Abtrennstelle ist mit einem beweglichen Leiterelement ausgestattet, welches dazu dient, auch bei einer schleichenden Erwärmung eine eindeutige Schaltungsfunktion sicherzustellen. Dazu ist vorgesehen, dass das dortige bewegliche Leiterelement unter Verwendung eines Wischers oder schleifenden Kontaktes zwischen drei Positionen bewegbar ist.

Die Verwendung von drei Positionen mag das Ansprechverhalten der bekannten Anordnung positiv beeinflussen. Jedoch ist eine derartige Konstruktion als kostenaufwendig und groß bauend einzuschätzen.

Der Offenlegungsschrift DE 10 2018 215 830 A1 ist eine Abtrennvorrichtung für einen Überspannungsableiter entnehmbar. Anschlussmittel dienen einer elektrischen Kontaktierung der Abtrennvorrichtung. Innerhalb eines dielektrisch geschirmten Raumes eines der Anschlussmittel ist ein Berstbehälter angeordnet, welcher zum Beispiel mit einer temperatursensitiven Flüssigkeit gefüllt ist. Bei Überschreiten einer Temperaturgrenze erfolgt ein zumindest teilweises zerstören des Berstbehälters und damit eine Auslösung der Abtrennvorrichtung. Eine Trennschalteinrichtung ist aus der Offenlegungsschrift DE 10 2007 012 296 A1 bekannt. Dort sind zwei Elektrodenstücke unter Zwischenlage eines ringförmigen, elektrisch isolierenden Abstandhalters zur Anlage gebracht. Die Elektrodenstücke dienen einer elektrischen Kontaktierung der Trennschalteinrichtung. Eine der Elektroden weist eine Ausnehmung auf, in welcher ein Gasgenerator angeordnet ist. Die Ausnehmung ist von einer Elektrodenplatte überspannt, sodass der Gasgenerator in einem dielektrisch geschirmten Raum angeordnet ist.

Somit ergibt sich als Aufgabe der Erfindung eine kostengünstige Anordnung anzugeben, welche bei kompakten Abmessungen ein hinreichend zuverlässiges Ansprechverhalten aufweist.

Erfindungsgemäß wird die Aufgabe bei einer Anordnung der eingangs genannten Art gemäß dem Anspruch 1, dadurch gelöst, dass elektrisch parallel zum ersten Pfad, ein zweiter Pfad, aufweisend ein Impedanzelement, zwischen dem ersten sowie dem zweiten Kontaktmittel angeordnet ist, wobei im ersten Pfad eine Funkenstrecke (z.B. Pegelfunkenstrecke) und das thermisch auslösbare Schaltelement in Reihe geschaltet angeordnet sind. Eine Trenneinrichtung dient einem Auftrennen einer elektrisch leitenden Verbindung. Eine derartige Verbindung kann beispielsweise eine Erdverbindung sein. Derartige Erdverbindungen werden genutzt, um temporär einen Erdschluss herbeizuführen und dadurch in

Elektroenergieübertragungsnetzen Überspannungen abzubauen. Um die Erdverbindung nur in Fällen von Grenzen überschreitenden Überspannungen auszubilden, werden sogenannte Überspannungsableiteinrichtungen eingesetzt.

Überspannungsableiteinrichtungen sind in einer Erdverbindung, welche von einem Phasenleiter eines

Elektroenergieübertragungsnetzes zu Erdpotential verläuft, eingesetzt. Überspannungsableiteinrichtungen weisen beispielsweise ein Varistor auf, welcher in Abhängigkeit einer anliegenden Spannung sein Impedanzverhalten ändert. Je nach Spannungsebene weisen Varistoren unterschiedliche Schwellwerte auf, oberhalb welchem sie ein niederohmiges Verhalten annehmen und unterhalb welchem sie ein hochohmiges Verhalten annehmen.

Um bei einem Störfall, beispielsweise einem Kurzschluss in einem Varistor, ein dauerhaftes Aufrechterhalten einer Erdverbindung auszuschließen, werden Trenneinrichtungen eingesetzt, die in einem solchen Störfall die Erdverbindung auftrennen. Dies erfolgt im Regelfall irreversibel unter Zerstörung der Trenneinrichtung.

Trenneinrichtungen weisen im Regelfalle ein erstes Kontaktmittel sowie ein zweites Kontaktmittel auf. Die Kontaktmittel dienen der Einbindung der Trenneinrichtung in eine Ableitverbindung. So kann beispielsweise ein Kontaktmittel mit einer Überspannungsableiteinrichtung elektrisch leitend verbunden sein, wohingegen das andere Kontaktmittel mit Erdpotential verbunden ist. Um im Störfall die Trenneinrichtung ansprechen zu lassen, ist ein thermisch auslösbares Schaltelement vorzusehen. In Abhängigkeit der thermischen Belastung wird ein Auslösen des Schaltelementes vorgenommen. D.h. bei Überschreiten einer bestimmten Energieeintrages (z.B. thermische Energie) öffnet (unterbricht) das thermisch auslösende Schaltelement. Das thermisch auslösende Schaltelement ist dazu in einem ersten Pfad angeordnet, welcher zwischen dem ersten Kontaktmittel und dem zweiten Kontaktmittel verläuft. Ein thermisch auslösendes Schaltelement kann beispielsweise nach Art einer Schmelzsicherung aufgebaut sein.

Elektrisch parallel zum ersten Pfad ist vorteilhaft ein zweiter Pfad angeordnet, welcher sich ebenso wie der erste Pfad zwischen dem ersten Kontaktmittel und dem zweiten Kontaktmittel erstreckt. Innerhalb des zweiten Pfades ist vorteilhaft ein Impedanzelement angeordnet. Das Impedanzelement ist vorteilhaft ein ohmscher Widerstand (alternativ auch ein Varistor oder ein ohmscher Widerstand mit parallelem Kondensator), welcher hochohmig ist (zum Beispiel mehrere kOhm, mehrere 10 kOhm). Das Impedanzelement ermöglicht, über die Trenneinrichtung, in begrenztem Maße beispielsweise durch einen Varistor fließende Leckströme gegen Erdpotential abfließen zu lassen. Ein Leckstrom wird im Wesentlichen durch die Impedanz des Varistors im Sperrzustand begrenzt.

Durch die Anordnung einer Funkenstrecke (z.B. eine Pegelfunkenstrecke) im ersten Pfad bevorzugt in Reihe zu dem dort befindlichen thermisch auslösenden Schaltelement ist die Möglichkeit gegeben derartige Leckströme, welche eine normale Betriebsgröße darstellen ausschließlich über das Impedanzelement abfließen zu lassen. Der erste Pfad bleibt freigehalten von derartigen Strombelastungen. Entsprechend ist auch das thermisch auslösende Schaltelement von einer Vorbelastung freigehalten, so dass Alterungserscheinungen an demselben oder eine unerwünschte Vortemperierung usw. verhindert ist.

Mit Zunahme eines Leckstromes, beispielsweise durch die Alterung einer vorgeschalteten Überspannungsableiteinrichtung oder einen Kurzschluss in einem Varistor usw., nimmt der Spannungsfall über dem Impedanzelement zu. Bei einem Zunehmen des Leckstromes und einem Überschreiten einer nicht tolerierbaren Schwelle, spricht man von einem Störstrom. Bei einem Auftreten eines Störstromes wird ein Grenzwert für den Spannungsfall über dem Impedanzelement erreicht. Man spricht von dem Erreichen einer Grenzspannung. Ein Überschreiten der Grenzspannung führt zu einem Ausbilden eines Lichtbogens in der Funkenstrecke, wodurch ein Stromfluss auch über den ersten Pfad erfolgt. Entsprechend den sich einstellenden Impedanzverhältnissen im ersten und zweiten Pfad, kommt es zu einer entsprechenden Aufteilung des Störstromes auf den ersten und zweiten Pfad. Der Störstrom kommutiert von dem zweiten Pfad auf den ersten Pfad. Die Funkenstrecke schaltet durch. Das sich weiterhin im ersten Pfad befindliche thermisch auslösbare Schaltelement wird über das Durchschalten der Funkenstrecke einerseits mit dem sich im ersten Pfad einstellenden Strom (und der entsprechenden Stromwärme) beaufschlagt, andererseits ist das Schaltelement der thermischen Energie des Lichtbogens ausgesetzt. Bedingt durch den Stromfluss im ersten Pfad und/ oder durch die thermische Wirkung des Lichtbogens in der Funkenstrecke, kommt es zu einer Einbringung von thermischer Energie in die Trenneinrichtung und zu einem Schalten der thermisch auslösbaren Schalteinrichtung. Über die Funkenstrecke wird das thermisch auslösbare Schaltelement angesteuert (ausgelöst). Funkenstrecke und thermisch auslösbares Schaltelement sind im ersten Pfad in Reihe geschaltet. Mit einem Auslösen des Schaltelementes erfolgt bevorzugt eine Verlängerung der Funkenstrecke. Mit anderen Worten zumindest ein Lichtbogenfußpunkt (Lichtbogenhorn) der Funkenstrecke verlagert (insbesondere durch Abbrand bedingt) seine Position.

Vorteilhafterweise kann dabei weiter vorgesehen sein, dass das thermisch auslösbare Schaltelement einen ersten Schaltabschnitt sowie einen zweiten Schaltabschnitt aufweist, welche über eine thermisch auslösbare Sollbruchstelle miteinander elektrisch leitend verbunden sind.

Ein thermisch auslösbares Schaltelement dient einem Schalten in Abhängigkeit einer Änderung der einwirkenden thermischen Energie. Bevorzugt kann das thermisch auslösbare Schaltelement bei einem Anstieg der thermischen Energie ein Öffnen bzw. Trennen bewirken. Ein Öffnen bzw. Trennen zeichnet sich dadurch aus, dass die im Schaltelement vorliegende Impedanz sich bevorzugt gegen unendlich vergrößert. Durch die Nutzung eins Schaltelementes mit einem ersten Schaltabschnitt sowie einem zweiten Schaltabschnitt ist die Möglichkeit gegeben, die Schaltabschnitte relativ zueinander zu bewegen, um das Impedanzverhalten des thermisch auslösebaren Schaltelementes zu verändern. Dazu ist vorteilhaft eine thermisch auslösbare Sollbruchstelle zwischen dem ersten Schaltabschnitt und dem zweiten Schaltabschnitt angeordnet. Die Sollbruchstelle weist dazu vorteilhaft eine geringere Wärmetragfähigkeit auf, als zumindest einer der Schaltabschnitte. Die Sollbruchstelle kann dabei verschiedenartig ausgeführt sein. Beispielsweise können der erste Schaltabschnitt sowie der zweite Schaltabschnitt diskret aufgebaut sein und unter Ausbildung der Sollbruchstelle miteinander verbunden sein. Eine Sollbruchstelle kann beispielsweise eine elektrisch leitende Verbindung zwischen dem ersten Schaltabschnitt und dem zweiten Schaltabschnitt sein. Der erste Schaltabschnitt sowie der zweite Schaltabschnitt können beispielsweise durch ein stoffschlüssiges Fügen miteinander verbunden sein. So können die beiden Schaltabschnitte beispielsweise miteinander verschweißt oder verlötet sein. Darüber hinaus können jedoch auch weitere Fügeverfahren zwischen dem ersten sowie dem zweiten Schaltabschnitt Verwendung finden. Beispielsweise können der erste und der zweite Schaltabschnitt kraftschlüssig, formschlüssig usw. miteinander verbunden sein. Eine derartige thermisch auslösbare Sollbruchstelle kann jedoch auch beispielsweise durch eine Materialschwächung gegenüber den Schaltabschnitten (insbesondere durch einen reduzierten Querschnitt) ausgebildet sein.

In einer bevorzugten Variante sind der erste Schaltabschnitt und der zweite Schaltabschnitt mittels eines elektrisch leitenden Lotes stoffschlüssig verbunden. Dabei ist bevorzugt ein flächiges Überlappen der Schaltabschnitte miteinander unter Zwischenanordnung des Lotes von Vorteil. Insbesondere kann die thermisch auslösbare Sollbruchstelle in der Nähe der Funkenstrecke angeordnet sein. Besonders vorteilhaft kann vorgesehen sein, dass in der Nähe der thermisch auslösbare Sollbruchstelle zumindest vorübergehend ein Lichtbogenfußpunkt der Funkenstrecke angeordnet ist. Dies hat den Vorteil, dass von einem Lichtbogen in der Funkenstrecke ausgehende thermische Energie vergleichsweise direkt auf die thermisch auslösbare Sollbruchstelle einwirken kann.

Vorteilhafterweise kann weiter vorgesehen sein, dass zur Aufbringung einer Vorspannkraft ein Federelement genutzt wird, welches den zweiten Schaltabschnitt gegen das zweite Kontaktmittel presst.

Eine Vorspannkraft kann genutzt werden, um die thermisch auslösbare Sollbruchstelle unter mechanische Spannung zu setzen und diese beispielsweise örtlich zu fixieren. So ist sichergestellt das die Funktionsweise des thermisch auslösenden Schaltelementes aufgrund der fixierten Ortslage gewährleistet ist. Beispielsweise kann durch die Vorspannkraft des Federelementes auch eine elektrische Kontaktierung zum Beispiel einer Gleitkontaktanordnung sichergestellt werden. Des Weiteren ist es auch möglich, dass die Vorspannkraft des Federelementes eine Relativbewegung von relativ zueinander bewegbaren Schaltabschnitten des thermisch auslösbaren Schaltelementes antreibt. Das Federelement ist somit eine Antriebseinrichtung für eine Relativbewegung von Schaltabschnitten des thermisch auslösbaren Schaltelementes.

Zwischen dem zweiten Kontaktmittel und dem zweiten Schaltabschnitt kann über die Vorspannkraft des Federelementes eine Sicherung einer elektrischen (Gleit-) Kontaktierung zwischen dem zweiten Schaltabschnitt und dem zweiten Kontaktmittel hervorgerufen werden. Eine Kontaktierung von zweitem Schaltabschnitt und zweitem Kontaktmittel kann bevorzugt in einem Bereich vorgesehen sein, in welchen das zweite Kontaktmittel zumindest zeitweise einen Lichtbogenfußpunkt für eine Funkenstrecke zur Verfügung stellt. Bei einer Nutzung des Federelementes als Antriebselement für eine Relativbewegung der Schaltabschnitt zueinander, kann das Federelement bevorzugt eine im Wesentlichen lineare relative Bewegbarkeit bzw. Bewegung zwischen den beiden Schaltabschnitten hervorrufen. Dadurch wird eine schmal- bzw. kompaktbauende Trenneinrichtung ermöglicht.

Weiter kann vorteilhaft vorgesehen sein, dass die Vorspannkraft auf zumindest einen Schaltabschnitt im Wesentlichen parallel zu einer Achse wirkt, die von dem ersten Kontaktmittel zum zweiten Kontaktmittel verläuft.

Die Vorspannkraft kann auf zumindest einen der Schaltabschnitte im Wesentlichen derart wirken, dass eine Linearbewegung relativ zu dem anderen Schaltabschnitt nach einem auslösen des thermisch auslösbaren Schaltelementes erfolgt. Die Achse verläuft dabei bevorzugt durch die Kontaktflächen des ersten und zweiten Kontaktmittels, die einer elektrischen Kontaktierung in eine Erdverbindung dienen. Die Vorspannkraft kann auch über eine Sollbruchstelle des thermisch auslösbaren Schaltelementes übertragen werden. Eine Zugkraft kann dabei bevorzugt zwischen einem Schaltabschnitt und dem zweiten Kontaktmittel verlaufen. Das zweite Kontaktmittel kann als ortsfestes Widerlager zur Aufnahme der von dem Federelement ausgehenden Kräfte dienen. Der antreibbare Schaltabschnitt hingegen kann über die Sollbruchstelle des thermisch auslösbaren Schaltelementes eine Kraft übertragen, sodass im unausgelösten Zustand des thermisch auslösbaren Schaltelementes über die Sollbruchstelle hinweg auch ein Kraftfluss erfolgt. Über die Sollbruchstelle kann so auch eine Fixierung des insbesondere ersten Schaltabschnittes (bei einem primären Angreifen der Vorspannkraft des Federelementes am zweiten Schaltabschnitt) vorgesehen sein. Beispielsweise kann der erste Schaltabschnitt federkraftbelastet an einem Vorsprung gestützt sein.

Vorteilhafterweise kann weiter vorgesehen sein, dass der erste Schaltabschnitt unter Zwischenlage eines Isolierabschnittes von dem Federelement gegen das erste Kontaktmittel gepresst ist.

Das erste Kontaktmittel weist zur Übernahme einer Kontaktierungsfunktion elektrisch leitende Eigenschaften auf. Analog ist auch das zweite Kontaktmittel mit elektrisch leitenden Eigenschaften ausgestattet, um auch dort eine Kontaktierungsfunktion wahrnehmen zu können. Ein Abstützen des ersten Schaltabschnitt des unter Zwischenlage eines Isolatorabschnittes ermöglicht es, den ersten Schaltabschnitt elektrisch isoliert am ersten Kontaktmittel zu stützen und zu fixieren. So ist es beispielsweise möglich, dass einander hintergreifende Schultern des ersten Schaltabschnittes bzw. des ersten Kontaktmittels gegeneinandergezogen werden, wobei im Anpressbereich ein Isolierabschnitt zwischengelegt ist. Somit ist die Möglichkeit gegeben, insbesondere zwischen dem ersten Schaltabschnitt sowie dem ersten Kontaktmittel zumindest zeitweise zumindest einen Abschnitt der Funkenstrecke auszubilden und den ersten Schaltabschnitt elektrisch isoliert gegenüber dem ersten Kontaktmittel anzuordnen.

Weiterhin kann vorteilhaft vorgesehen sein, dass die Anordnung ein Gehäuse mit einem ersten Gehäuseabschnitt und einem zweiten Gehäuseabschnitt aufweist, in welchem das erste Kontaktmittel, das zweite Kontaktmittel und das Schaltelement eingelegt sind, wobei eine Fügeachse zwischen erstem Gehäuseabschnitt und zweitem Gehäuseabschnitt im Wesentlichen quer zu einer Achse ausgerichtet ist, die von dem ersten Kontaktmittel zum zweiten Kontaktmittel verläuft.

Mittels eines Gehäuses kann die Trenneinrichtung vor äußeren Einflüssen geschützt werden. Das Gehäuse kann dabei dazu dienen die einzelnen Bauteile der Trenneinrichtung relativ zueinander zu positionieren. So können in dem Gehäuse beispielsweise Aufnahmen vorgesehen sein, die eine formkomplementäre Positionierung zum Beispiel des ersten Kontaktmittels, des zweiten Kontaktmittels, des thermisch auslösbaren Schaltelements, des Impedanzmittels, der Funkenstrecke usw. dienen. Das Gehäuse kann als Chassis der Trenneinrichtung dienen. Des Weiteren kann das Gehäuse auch derart ausgestaltet sein, dass bei einem Auslösen des thermisch auslösbaren Schaltelementes eine Relativbewegung geleitet wird bzw. eine Verformung, eine Zwangsführung oder ein Ablegen usw. zumindest von Teilen des Schaltelementes innerhalb des Gehäuses erfolgt. Somit kann ein definiertes Auslösen des thermisch auslösbaren Schaltelementes unterstützt werden.

Mittels zweier Gehäuseabschnitte ist die Möglichkeit gegeben eine vereinfachte Montage des Gehäuses und eine Positionierung zum Beispiel der Kontaktmittel, des Schaltelementes, des Impedanzelementes usw. vorzunehmen. Die Gehäuseabschnitte können beispielsweise im Wesentlichen nach Art von Halbschalen ausgebildet sein. Das Gehäuse kann in seinem Inneren einen Innenraum begrenzen, innerhalb welchem einzelne Bauteile der Trenneinrichtung angeordnet werden können. Die Gehäuseabschnitte können aber entsprechende Aufnahmen (z.B. Ausnehmungen, Schultern, Vorsprünge usw.) aufweisen, in welche Bauteile der Trenneinrichtung eingesetzt werden können.

Bevorzugt ist eine Fügeachse zwischen Gehäuseabschnitten derart ausgerichtet, dass diese im Wesentlichen quer zu einer Achse ausgerichtet ist, welche von dem ersten Kontaktmittel zum zweiten Kontaktmittel verläuft. Somit ist Möglichkeit gegeben, innerhalb des Gehäuses bzw. an den Gehäuseabschnitten Aufnahmen bzw. Widerlager für relativ zueinander bewegbare Bauteile vorzusehen, sodass bei einer Belastung derselben die Fügestelle zwischen den Gehäuseabschnitten möglichst frei von einer Überlastung gehalten sind. Beispielsweise kann vorgesehen sein, dass an dem thermisch auslösbaren Schaltelement relativ zueinander bewegbare Schaltabschnitte vorgesehen sind, welche bei einem Auslösen voneinander entfernt werden. Diese Bewegung kann bevorzugt eine lineare Relativbewegung zwischen den Schaltabschnitten sein. Die Achse dieser Linearbewegung ist bevorzugt im Wesentlichen quer zur Fügeachse zwischen dem ersten Gehäuseabschnitt und dem zweiten Gehäuseabschnitt ausgerichtet. Dies ermöglicht es zum Beispiel Führungsbahnen vorzusehen, welche gerade nicht über eine Fügestelle zwischen den Gehäuseabschnitten verlaufen. Vorteilhaft ist eine Relativbewegung zwischen den Schaltabschnitten im Wesentlichen parallel zu einer Achse zwischen dem ersten und zweiten Kontaktmittel ausgerichtet.

Eine weitere vorteilhafte Ausgestaltung kann vorsehen, dass das Gehäuse von einem Überwurf umgriffen ist, welcher den ersten sowie den zweiten Gehäuseabschnitt relativ zueinander fixiert.

Das Gehäuse kann von einem Überwurf umgriffen sein. Der Überwurf kann beispielsweise einen ersten Gehäuseabschnitt relativ zu einem zweiten Gehäuseabschnitt sichern. Die Gehäuseabschnitte können beispielsweise zusammengesetzt eine Zylindermantelfläche bilden, welche von dem Überwurf umgriffen ist. Eine Fügeachse zwischen dem ersten Gehäuseabschnitt und dem zweiten Gehäuseabschnitt kann bevorzugt quer zu einer Zylinderachse der Zylindermantelfläche liegen. Durch einen Umgriff mit dem Überwurf ist so ein radiales Entfernen der Gehäuseabschnitte voneinander verhindert. Bevorzugt können die Gehäuseabschnitte jeweils nach Art einer Halbschale ausgebildet sein, die zusammengesetzt im Wesentlichen eine kreiszylindrische Mantelfläche aufweisen und welche von dem Überwurf umgriffen sind. Der Überwurf kann beispielsweise nach Art einer Hülse ausgebildet sein, welche mantelseitig zumindest abschnittsweise das Gehäuse vollständig umgreift. So ist zwischen dem Gehäuse und dem Überwurf ein Fügespalt gebildet.

Eine weitere vorteilhafte Ausgestaltung kann vorsehen, dass der Überwurf das Gehäuse hülsenartig umgreift, wobei ein erster Hülsenabschnitt mit einem zweiten Hülsenabschnitt steckverbindlich zusammengefügt sind.

Durch die Gestaltung des Überwurfes in Form einer Hülse können Fügestellen inzwischen Gehäuseabschnitten des Gehäuses überdeckt werden. Somit sind Fügestellen vor dem Eindringen von Partikeln geschützt. Vorteilhaft kann die Hülse das Gehäuse mantelseitig vollständig umschließen und auch stirnseitig einen Abschluss des Gehäuses bewirken. Stirnseitig können entsprechende elektrisch leitende Durchsätze im Überwurf vorgesehen sein, sodass eine elektrische Kontaktierung durch den Überwurf hindurch ermöglicht ist. Vorteilhaft kann dabei vorgesehen sein, dass der Überwurf einen ersten sowie einen zweiten Hülsenabschnitt aufweist, welche steckverbindlich zusammengefügt werden können. Bevorzugt kann der Steckverbund ringförmig ausgebildet sein sodass ein mantelseitig umlaufender Fügespalt in dem Überwurf gegeben ist. Der Fügespalt zwischen den Hülsenabschnitten kann beispielsweise mittels eines Dichtelementes abgedichtet werden. Des Weiteren können die Hülsenabschnitt miteinander formschlüssig Verbunden und/ oder dadurch in axialer und radialer Richtung gesichert werden. Neben einem Sichern der Relativlage der Hülsenabschnitt zueinander kann so auch ein Anpressen beispielsweise von Durchsätzen vorgesehen sein, um in dem Gehäuse befindliche Kontaktmittel der Trenneinrichtung elektrisch zu kontaktieren. Beispielsweise kann eines der Kontaktmittel elastisch federnd ausgebildet sein, so dass die Hülsenabschnitte eine Anpresskraft auf die Durchsätze aufbringen und eine elektrische Kontaktierung gewährleistet ist.

Die Hülsenabschnitte können verdrehgesichert miteinander verbunden sein. Dazu können entsprechende Rastnasen eine Verdrehsicherung bewirken. Darüber hinaus können auch weitere Nut-Feder-Strukturen zwischen den Hülsenabschnitten vorgesehen sein.

Eine weitere vorteilhafte Ausgestaltung kann vorsehen, dass ein von dem Gehäuse begrenzter Innenraum über zumindest einen Kanal mit einem zwischen Gehäuse und Überwurf befindlichen Fügespalt verbunden ist.

Das Gehäuse umgibt einen Innenraum, welcher beispielsweise zur Aufnahme des Impedanzelementes, der Kontaktmittel, der Funkenstrecke, des thermisch auslösbaren Schaltelementes dient. Innerhalb des Gehäuses, also im Innenraum, kann insbesondere auch die Positionierung der Funkenstrecke vorgesehen sein. Bei einem Auftreten eines Lichtbogens innerhalb der Funkenstrecke kann es zum Expandieren von Gasen kommen. Diese Gase sind beispielsweise mit Abbrandprodukten des Gehäuses bzw. der innerhalb des Gehäuses angeordneten Baugruppen versetzt. Ein Kanal durchgesetzt beispielsweise eine Wandung, welche den Innenraum des Gehäuses begrenzt, und verbindet den Innenraum mit der Umgebung. Die Umgebung kann des Gehäuses kann ein mittels eines Überwurfes gebildeter Fügespalt sein. Bevorzugt können auch mehrere Kanäle am Gehäuseumfang verteilt angeordnet sein, sodass mehrere Kanäle innerhalb eines Fügespaltes zwischen Gehäuse und Überwurf münden. Bei einem Auftreten eines Überdruckes (zum Beispiel ausgelöst durch einen Lichtbogen) können Überdrücke aus dem Innenraum über den Kanal in den Fügespalt hinein entweichen. Der Überdruck kann dazu genutzt werden, dass bei einem erwünschten Entfernen des Überwurfes von dem Gehäuse (z.B. durch Auseinandertreiben der Hülsenabschnitte) der Fügespalt geweitet wird. Dadurch ist ein einfacheres Lösen von Gehäuse und Überwurf ermöglicht

Weiterhin kann vorteilhaft vorgesehen sein, dass der erste Hülsenabschnitt einen elektrisch leitenden Durchsatz aufweist, welcher mit dem ersten Kontaktmittel elektrisch leitend verbunden ist und der zweite Hülsenabschnitt einen elektrisch leitenden Durchsatz aufweist, welcher mit dem zweiten Kontaktmittel elektrisch leitend verbunden ist.

Die Nutzung eines Hülsenabschnittes und die Verwendung eines elektrisch leitenden Durchsatzes am jeweiligen Hülsenabschnitt ermöglicht es, ein elektrisches Potenzial durch den Hülsenabschnitt in das Innere, bevorzugt zu einem der Kontaktmittel der Trenneinrichtung zu übertragen. Der Hülsenabschnitt und der elektrisch leitende Durchsatz können winkelstarr miteinander verbunden sein. Die Kontaktmittel können bevorzugt jeweils mit einem Durchsatz elektrisch leitend kontaktiert sein, sodass das die Kontaktmittel unabhängig voneinander jeweils durch einen Hülsenabschnitt des Überwurfes hindurch kontaktiert sind. Bevorzugt können bei der Nutzung eines Überwurfes mit jeweils einem Hülsenabschnitt elastisch verformbare Elemente innerhalb des Hülsenabschnitt des beispielsweise durch eine entsprechende Ausformung eines der Kontaktmittel vorgesehen sein. Die Durchsätze können jeweils an entgegengesetzten Enden des Überwurfes bzw. des Gehäuses bevorzugt koaxial entgegengesetzt zueinander ausgerichtet angeordnet sein. Bei einer Ausgestaltung eines im Wesentlichen zylindrischen Gehäuses bzw. eines Überwurfes sollten elektrisch leitende Durchsätze jeweils an voneinander abgewandten Stirnseiten positioniert sein. Als Durchsätze kommen beispielsweise Gewindebolzen in Betracht, über welche mittels Mutter/Gewindebohrungen eine elektrische Kontaktierung erfolgen kann.

Eine weitere vorteilhafte Ausgestaltung kann vorsehen, dass der erste Schaltabschnitt eine größere Wandstärke aufweist als der zweite Schaltabschnitt.

Ein thermisch auslösbares Schaltelement kann einen ersten sowie einen zweiten Schaltabschnitt aufweisen. Die beiden Schaltabschnitte können über eine Sollbruchstelle miteinander verbunden sein, wobei eine Relativbewegung zwischen den beiden Schaltabschnitten im Zuge einer Auslösung des thermisch auslösbaren Schaltelementes erfolgen kann. Die Nutzung von Schaltabschnitten mit unterschiedlichen Wandstärken ermöglicht es das Ansprechverhalten des thermisch auslösbaren Schaltelementes einzustellen. Durch die Wandstärke kann die Wärmeaufnahme bzw. Wärmeabgabe des ersten Schaltabschnittes verändert werden. Bevorzugt kann der erste Schaltabschnitt als ortsfester Schaltabschnitt ausgebildet sein. Der zweite Schaltabschnitt kann als bewegbarer Schaltabschnitt ausgebildet sein. Bevorzugt zu kann eine Relativbewegung zwischen den Schaltabschnitten eine Linearbewegung sein.

Weiterhin kann vorteilhaft vorgesehen sein, dass der erste Schaltabschnitt eine größere Breite aufweist als der zweite Schaltabschnitt.

Eine gegenüber dem zweiten Schaltabschnitt vergrößerte Breite des ersten Schaltabschnittes ermöglicht es, den ersten Schaltabschnitt an dem/ den verbreiterten Bereich(en) zu fassen und diesen örtlich zu fixieren. Insbesondere bei einem Einsetzen des ersten Schaltabschnitts in das Gehäuse (welches insbesondere aus mehreren Gehäuseabschnitte zusammengesetzt ist) können die verbreiterten Abschnitte des Schaltabschnittes an Schultern anliegend positioniert werden, wodurch ein Herausbewegen des ersten Schaltabschnittes aus seiner ortsfesten Position erschwert wird.

Weiterhin kann vorteilhaft vorgesehen sein, dass der zweite Schaltabschnitte eine Knautschzone, insbesondere in Form einer perforierten Zone aufweist.

Die Ausstattung des Schaltabschnittes mit einer Knautschzone ermöglicht es im Zuge einer Relativbewegung der Schaltabschnitte zueinander den zweiten Schalterschnitt zu verformen. Dadurch ist eine bauraumsparende Struktur für die Trenneinrichtung ermöglicht. So kann der zweite Schaltabschnitt beispielsweise getrieben von einer Federeinrichtung, die ihn z.B. bereits im Ruhezustand unter Vorspannung versetzte, in eine Ausschaltposition hinein bewegt werden und dabei einer Verformung beispielsweise einer Faltung oder einem Einrollen unterzogen werden. Dadurch kann eine kompakte Gehäusestruktur Verwendung finden.

Vorteilhafterweise kann weiter vorgesehen sein, dass das zweite Kontaktmittel einen Lichtbogenfußpunkt aufweist.

Das zweite Kontaktmittel kann einen Lichtbogenfußpunkt (Funkenhorn) aufweisen, um Beispielsweise die Funkenstrecke zu begrenzen. Im Zuge eines Ansprechens der thermisch auslösbaren Schalteinrichtung kann es zu einem Vergrößern der Funkenstrecke kommen, indem beispielsweise das thermisch auslösbare Schaltelement aufgrund einer Relativbewegung seine Lage ändert oder durch eine Auflösung desselben die Funkenstrecke verlängert wird. Die Funkenstrecke kann im unausgelösten Zustand beispielsweise insbesondere zwischen einem Lichtbogenfußpunkt am ersten Kontaktmittel sowie dem thermisch auslösbaren Schaltelement, insbesondere dort am ersten Schaltabschnitt ausgebildet sein. Die Funkenstrecke kann im nicht angesprochenen Zustand der Schalteinrichtung eine Dimension von wenigen Millimetern aufweisen, um den Lichtbogen, der gegebenenfalls zu zünden ist, nahe im Bereich des thermisch auslösbaren Schaltelementes zu halten. Nach einem Auslösen des thermisch auslösbaren Schaltelementes kann das zweite Kontaktmittel einen Lichtbogenfußpunkt zur Verfügung stellen. So kann zwischen dem ersten Kontaktmittel und dem zweiten Kontaktmittel über eine wesentliche größere Distanz als einige wenige Millimeter (z.B. einige 10 mm) die Funkenstrecke bei einem brennenden Lichtbogen vergrößert werden. Bevorzugt kann der Lichtbogenfußpunkt des zweiten Kontaktmittels dazu dienen, einen der Schaltabschnitte, insbesondere den zweiten Schaltabschnitt, mit diesem gleitbeweglich zu kontaktieren, um eine Kontaktanpresskraft zwischen dem zweiten Kontaktmittel sowie dem zweiten Schaltabschnitt zu erzeugen. Dazu kann eine auf den zweiten Schaltabschnitt wirkende Federeinrichtung Verwendung finden. Diese Federeinrichtung kann beispielsweise über ein Knie umgelenkt werden. Das Knie kann durch das zweite Kontaktmittel, insbesondere einen Lichtbogenfußpunkt gebildet sein. Dort kann unter Zwischenlage des zweiten Schaltabschnittes eine elektrisch leitende Gleitverbindung ausgebildet werden.

Eine weitere vorteilhafte Ausgestaltung kann vorsehen, dass das erste Kontaktmittel mit einer Überspannungsableiteinrichtung elektrisch leitend verbunden, insbesondere von dieser getragen ist oder das zweite Kontaktmittel mit einer Überspannungsableiteinrichtung elektrisch leitend verbunden, insbesondere von dieser getragen ist.

Eine Überspannungsableiteinrichtung weist ein spannungsabhängig veränderbares Impedanzelement, genannt Varistor auf. Mit dem Über- bzw. Unterschreiten eines Schwellwertes (Grenze, Grenzwert) einer Spannung ändert sich das Impedanzverhalten des Varistors. Unterhalb eines Schwellwertes ist dessen Impedanzverhalten gegen unendlich tendierenden. Oberhalb eines Schwellwertes reduziert sich die Impedanz des Varistors gegen Null. Aufgrund der realen Bedingungen ist jedoch das Impedanzverhalten unterhalb einer Schwellwertes nicht unendlich, sondern endlich hochohmig ausgeprägt, wodurch ein Leckstrom auftritt.

Das erste Kontaktmittel kann insbesondere unter Verwendung eines Durchsatzes mit der Überspannungsableiteinrichtung elektrisch leitend verbunden sein. So kann ein Durchsatz beispielsweise in Form eines Gewindebolzens ausgebildet sein, welcher in eine gegengleich ausgebildete Armatur der Überspannungsableiteinrichtung eingesetzt und dort winkelstarr fixiert ist. Über den entsprechenden Durchsatz kann die Trenneinrichtung winkelstarr mit der Überspannungsableiteinrichtung verbunden sein. Die Überspannungsableiteinrichtung kann die Trenneinrichtung über die zur elektrischen Kontaktierung vorgesehenen Baugruppen mechanisch halten. Weiterhin kann vorgesehen sein, dass das zweite Kontaktmittel mit der Überspannungsableiteinrichtung elektrisch leitend verbunden ist. Bezüglich der Ausgestaltung und Verbindung von dem ersten Kontaktmittel mit eine Überspannungsableiteinrichtung gilt gleichlautendes auch für die Nutzung des zweiten Kontaktmittel zur Verbindung mit einer Überspannungsableiteinrichtung.

Weiterhin kann vorteilhaft vorgesehen sein, dass das zweite Kontaktmittel mit Erdpotential beaufschlagt ist oder das erste Kontaktmittel mit Erdpotential beaufschlagt ist.

Um die Überspannungsableiteinrichtung in eine Erdverbindung einzubinden, ist die Überspannungsableiteinrichtung einerseits mit einem zu schützenden Phasenleiter zu verbinden. Der zu schützende Phasenleiter kann beispielsweise Hochspannung führen. Um die Überspannungsableiteinrichtung andererseits mit Erdpotential zu Beaufschlagen kann die Zwischenschaltung der Trenneinrichtung vorgesehen sein. Um eine Potenzialbeaufschlagung vorzunehmen, kann das zweite Kontaktmittel mit Erdpotential versehen sein. Dazu kann beispielsweise ein Durchsatz in Form eines Gewindebolzens Verwendung finden, an welchen zum Beispiel ein Erdseil über eine Schraubverbindung angeschlossen wird. Alternativ kann jedoch auch vorgesehen sein, dass das erste Kontaktmittel mit Erdpotenzial beaufschlagt ist. Entsprechendes gilt bezüglich des zweiten Kontaktmittels und seiner Beaufschlagung mit Erdpotential analog.

Im Folgenden wird ein Ausführungsbeispiel der Erfindung schematisch in einer Zeichnung gezeigt und nachfolgend näher beschrieben.

Dabei zeigt die
- Figur 1: eine Trenneinrichtung für eine Überspannungsableiteinrichtung im verbauten Zustand, die
- Figur 2: Teile einer Trenneinrichtung im nicht ausgelösten Zustand, die
- Figur 3: Teile der Trenneinrichtung während eines Auslösens, die
- Figur 4: Teile der Trenneinrichtung im ausgelösten Zustand, die
- Figur 5: ein Gehäuse einer Ausführungsvariante einer Trenneinrichtung freigeschnitten, die
- Figur 6: die Ausführungsvariante der Trenneinrichtung in einer Explosionsdarstellung und die
- Figur 7: die Ausführungsvariante einer Trenneinrichtung im Schnitt.

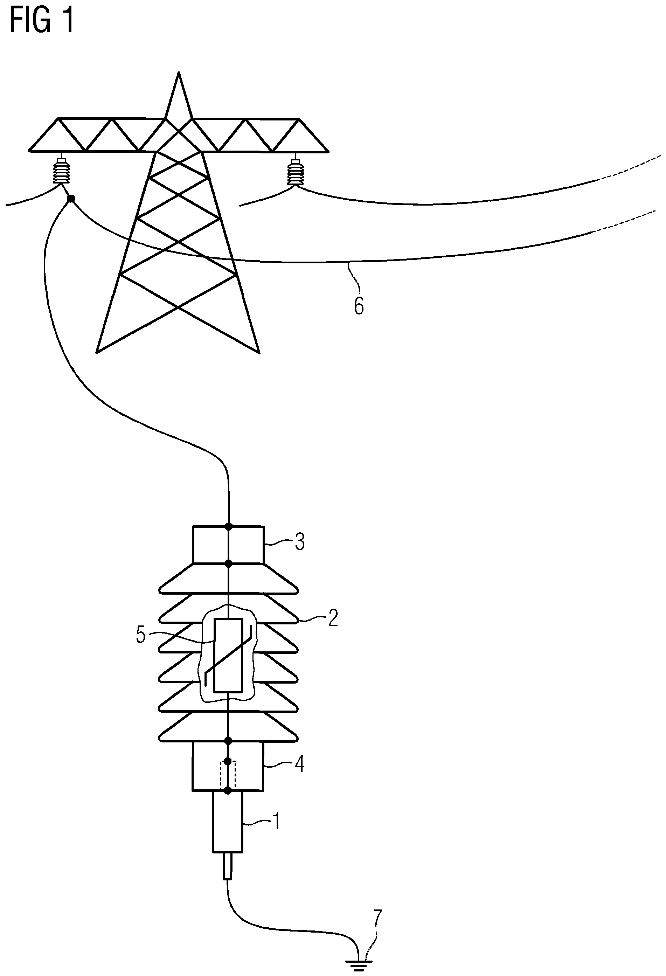

Die Figur 1 zeigt eine Anordnung aufweisend eine Trenneinrichtung 1. Die Trenneinrichtung 1 ist winkelstarr mit einer Überspannungsableiteinrichtung 2 verbunden. Die Überspannungsableiteinrichtung 2 weist einen ersten Armaturkörper 3 sowie einen zweiten Armaturkörper 4 auf. Die beiden Armaturkörper 3, 4 sind über einen elektrisch isolierenden Mantel mit einer vor Bewitterungseinflüssen schützenden Beschirmung voneinander beabstandet. Innerhalb des elektrisch isolierenden Mantels ist ein Varistor 5 angeordnet. Der Varistor 5 ist beispielsweise aus Zinkoxid gesintert. Der Varistor 5 ist innerhalb des Mantels einerseits mit dem ersten Armaturkörper 3 und andererseits mit dem zweiten Armaturkörper 4 elektrisch leitend kontaktiert.

Am zweiten Armaturkörper 4 ist winkelstarr die Trenneinrichtung 1 angeordnet. Über den zweiten Armaturkörper 4 erfolgt auch eine elektrische Kontaktierung der Trenneinrichtung 1. Die Überspannungsableiteinrichtung 2 sowie die Trenneinrichtung 1 sind Teil einer Erdverbindung, welche sich von einem Phasenleiter 6 einer Elektroenergieübertragungseinrichtung bis zu einem Erdpotential 7 erstreckt. Vorliegend handelt es sich bei der Elektroenergieübertragungseinrichtung um eine sogenannte Freileitung, deren Phasenleiter 6 vor Überspannungen zu schützen ist. Derartige Überspannungen können beispielsweise durch Blitzeinschläge hervorgerufen werden. Mittels eines Stromflusses über die Erdverbindung können derartige Überspannungen abgebaut werden. Um im regulären Betrieb einen Erdschluss über die Erdverbindung zu verhindern, ist die Überspannungsableiteinrichtung 2 in dem Verlauf der Erdverbindung angeordnet. In Abhängigkeit einer anliegenden Differenzspannung zwischen dem Phasenleiter 6 und dem Erdpotential 7 ändert der Varistor 5 der Überspannungsableiteinrichtung 2 seine Impedanz. Im regulären Betriebsfall tendiert die Impedanz des Varistors 5 gegen unendlich. Bei einem Überschreiten eines Schwellwertes (Grenzwert, Grenze) der Differenzspannung ändert sich die Impedanz des Varistors 5 gegen Null. Es kommt zu einem Durchschalten der Erdverbindung. Eine Überspannung auf dem Phasenleiter 6 kann durch einen Stromfluss abgebaut werden. Mit dem erfolgreichen Abbau der Überspannung reduziert sich die Differenzspannung zwischen Phasenleiter 6 und Erdpotential 7. Der Varistor 5 kann wieder ein hochohmiges Verhalten annehmen.

Bei einem Auftreten eines Fehlerfalles, zum Beispiel einem Durchschlagen des Varistors 5, bestünde die Gefahr einer dauerhaften Verbindung des Phasenleiters 6 mit dem Erdpotential 7. Dies wäre ein Erdschluss in der Elektroenergieübertragungseinrichtung, welcher nicht hinnehmbar wäre. Um diesem entgegen zu wirken, ist die Trenneinrichtung 1 in die Erdverbindung eingebracht. Die Trenneinrichtung 1 unterbricht die Erdverbindung dauerhaft, z.B. durch Zerstörung der Trenneinrichtung 1.

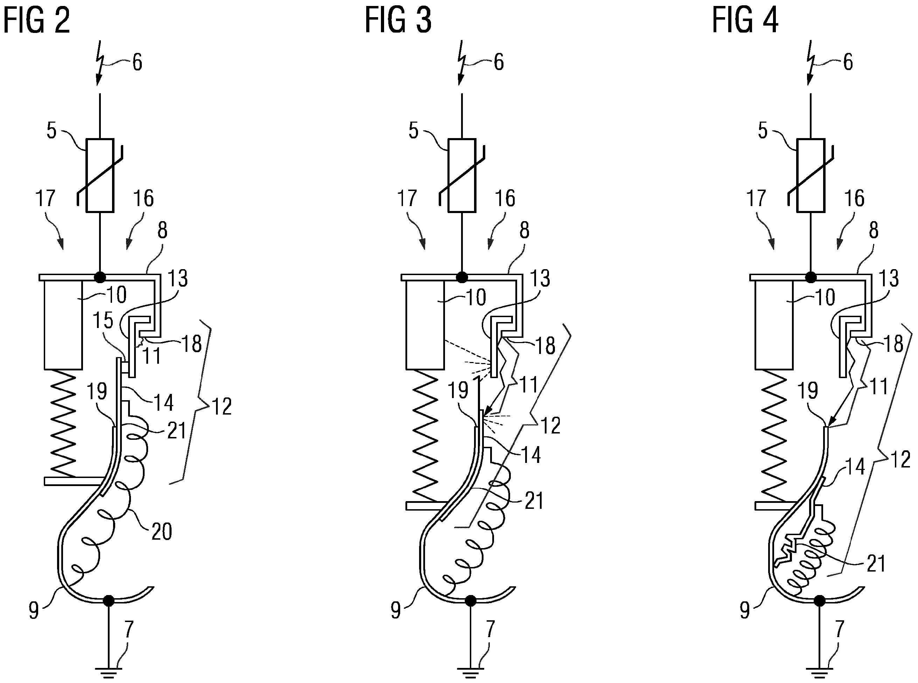

Im Folgenden soll anhand der Figuren 2, 3, 4, in denen Teile der Trenneinrichtung 1 dargestellt sind, die prinzipielle Funktionsweise der Trenneinrichtung 1 beschrieben werden. Die Trenneinrichtung 1 weist ein erstes Kontaktmittel 8, ein zweites Kontaktmittel 9, ein Impedanzelement 10, eine Funkenstrecke 11, sowie ein thermisch auslösbares Schaltelementes 12 auf. Das thermisch auslösbare Schaltelemente 12 weist einen ersten Schaltabschnitt 13 sowie einen zweiten Schaltabschnitt 14 auf, die über eine thermisch auslösbare Sollbruchstelle 15 verbunden sind. Der erste Schaltabschnitt 13 sowie der zweite Schaltabschnitt 14 sind bandartig ausgebildet, wobei die Bänder einander überlappen. Um den ersten Schaltabschnitt 13 und den zweiten Schaltabschnitt 14 miteinander zu verbinden, ist die thermisch auslösbare Sollbruchstelle 15 mittels des stoffschlüssige Fügeverfahrens "Löten" ausgebildet. Die thermisch auslösbare Sollbruchstelle 15 verbindet den ersten Schaltabschnitt 13 sowie den zweiten Schaltabschnitt 10 mechanisch sowie elektrisch leitend. Im Falle eines ausreichenden Energieeintrages (in thermischer Form) in die thermisch auslösbare Sollbruchstelle 15 erfolgt ein Auflösen der thermisch auslösbaren Sollbruchstelle 15 und der erste und der zweite Schaltabschnitt 13, 14 lösen sich voneinander.

Das erste Kontaktmittel 8 und das zweite Kontaktmittel 9 sind zunächst ortsfest zueinander angeordnet und über die Sollbruchstelle 15 verbunden. Die beiden Kontaktmittel 8, 9 sind dabei über eine elektrisch isolierende Konstruktion (z.B. Gehäuse) gehalten. Mit dem ersten Kontaktmittel 8 ist der Varistor 5 elektrisch leitend verbunden. Ausgehend von dem ersten Kontaktmittel 8 erstreckt sich ein erster Pfad 16 von dem ersten Kontaktmittel 8 über die Funkenstrecke 11, zu dem thermisch auslösbaren Schaltelement 12 bis zu dem zweiten Kontaktmittel 9. Parallel dazu ist ein zweiter Pfad 17 vorgesehen. Der zweite Pfad 17 erstreckt sich von dem ersten Kontaktmittel 8 über das Impedanzelement 10 bis zu dem zweiten Kontaktmittel 9. Um das Impedanzelement 10 zwischen dem ersten Kontaktmittel 8 und dem zweiten Kontaktmittel 9 zu positionieren ist eine Anpressfeder vorgesehen, welche sich am zweiten Kontaktmittel 9 abstützt, dort eine elektrische Kontaktierung vornimmt und das Impedanzelement 10 gegen das erste Kontaktmittel 8 presst. Somit sind der erste Pfad 16 sowie der zweite Pfad 17 elektrisch parallel zwischen dem ersten Kontaktmittel 8 sowie dem zweiten Kontaktmittel 9 angeordnet. Das erste Kontaktmittel 8 stellt einen ersten Lichtbogenfußpunkt 18 (Funkenhorn) zur Verfügung. Das zweite Kontaktmittel 9 stellt einen zweiten Lichtbogenfußpunkt 19 (Funkenhorn) zur Verfügung. Der zweite Lichtbogenfußpunkt 19 ist dabei nach Art eines Knies vorspringenden ausgebildet. An dem zweiten Lichtbogenfußpunkt 19 ist der zweite Schaltabschnitt 14 gleitend anliegend geführt. Aufgrund der Form des zweiten Lichtbogenfußpunktes 19 erfährt der anliegende zweite Schaltabschnitt 14 eine bevorzugt elastische Verformung. Mittels eines Federelementes 20 wird eine Zugspannung auf den zweiten Schaltabschnitt 14 aufgebracht. Wobei der zweite Schaltabschnitt 14 aufgrund der Zugkraft des Federelementes 20 in Richtung des zweiten Kontaktmittels 9 gezogen wird. Aufgrund einer ortsfesten Lagerung des ersten Kontaktmittels 8 ist die Lage und die Verbindung über die thermisch auslösbare Sollbruchstelle 15 ist das zweite Kontaktmittel 9 fixiert. Das thermisch auslösbare Schaltelementes 12 ist unter eine mechanische Vorspannung gesetzt. Um ein Verformen des zweiten Schaltabschnittes 14 zu unterstützen weist dieser eine Knautschzone 21 auf. Diese Knautschzone 21 ist beispielsweise durch eine Materialschwächung hervorgerufen. Die Materialschwächung kann beispielsweise durch Ausnehmungen in dem zweiten Kontaktmittel 9 ausgeführt sein.

Am zweiten Kontaktmittel 9 ist eine Lasche angeordnet. Die Lasche ist beispielsweise durch ein Ausbiegen eines Abschnittes am zweiten Kontaktmittel 9 gebildet. Die Lasche bildet ein Gegenlager um federbelastet das Impedanzelement 10 gegen das erste Kontaktmittel 8 zu pressen. Über die Lasche und die eingesetzte Anpressfeder erfolgt eine elektrische Kontaktierung des Impedanzelementes 10 mit dem zweiten Kontaktmittel 9. Über die Anpresskraft auf das Impedanzelement 10 ist dieses gegen das erste Kontaktmittel 8 gepresst. Somit ist ein zweiter Pfad 17 zwischen dem ersten Kontaktmittel 8 und dem zweiten Kontaktmittel 9 ausgebildet.

Im Folgenden soll anhand der Abfolge der Darstellungen in den Figuren 2, 3 und 4 die prinzipielle Funktionsweise einer Anordnung aufweisend eine Trenneinrichtung 1 für eine Überspannungsableiteinrichtung 2 beschrieben werden. Im regulären Betriebsfall (Varistor 5 nicht gestört, keine Überspannung auf dem Phasenleiter 6) weist der Varistor 5 ein hochohmiges Verhalten auf. Über den Varistor 5 fließt getrieben von einer elektrischen Spannung auf dem Phasenleiter 6 ein Leckstrom gegen das Erdpotential 7. Der Leckstrom fließen dabei über die Trenneinrichtung 1. Aufgrund der hohen Impedanz der Funkenstrecke 11 im ersten Pfad 16 fließt der Leckstrom nahezu vollständig über den zweiten Pfad 17 und das dort befindliche Impedanzelement 10 von dem ersten Kontaktmittel 8 zu dem zweiten Kontaktmittel 9 gegen Erdpotential 7. Bei einem Auftreten einer Überspannung auf dem Phasenleiter 6 ändert der Varistor 5 sein Impedanzverhalten gegen Null. Ein Ableitstrom getrieben von der Überspannung auf dem Phasenleiter 6, wird über den nunmehr niederohmigen Varistor 5 und das erste Kontaktmittel 8 sowie den zweiten Pfad 17 über das zweite Kontaktmittel 9 gegen Erdpotential geleitet. So erfolgt ein Abbau der Überspannung unter einen Schwellwert und der Varistor 5 ändert sein Impedanzverhalten wieder gegen unendlich. Über das Impedanzelement 10 wird dann wieder ein Leckstrom gegen Erdpotential 7 geleitet.

Im Falle einer dauerhaft anhaltenden Überspannung auf dem Phasenleiter 6 und einer befürchteten Überhitzung, oder im Falle eines Fehlers innerhalb des Varistors 5 kann es zu einem Auftreten eines dauerhaft anhaltenden Ableitstromes bzw. eines sehr hohen Ableitstromes von dem Phasenleiter 6 zu dem Erdpotential 7 kommen. Mit einem Zunehmen des Ableitstromes, welcher zunächst über das Impedanzelement 10 fließt, erfolgt auch eine Zunahme eines Spannungsfalles über dem Impedanzelement 10. Bei einem Überschreiten einer Grenzspannung des über dem Impedanzelement 10 abfallenden Spannungsfalles kommt es zu einem durchschlagen der Funkenstrecke 11. Über die Dimension der Funkenstrecke 11 ist das Ansprechverhalten der Funkenstrecke 11 festlegbar. Mit einem Durchschlagen der Funkenstrecke 11 kommt es zu einem Zünden eines Lichtbogens in der Funkenstrecke 11. Neben dem über den Lichtbogen fließenden elektrischen Strom, welcher auch über das thermisch auslösbare Schaltelementes 12 und das zweite Kontaktmittel gegen Erdpotential 7 fließt, erfolgt zusätzlich eine Erwärmung des thermisch auslösbaren Schaltelementes 11 durch den Lichtbogen. Durch den thermischen Eintrag wird die thermisch auslösbare Sollbruchstelle 15 geschwächt und schließlich aufgelöst.

Bedingt durch die von dem Federelement 11 aufgebrachte Vorspannkraft auf den zweiten Schaltabschnitt 14 des thermisch auslösbaren Schaltelementes 12 erfolgt eine Distanzierung der beiden Schaltabschnitte 13, 14 voneinander. Dadurch wird die Distanz der Funkenstrecke 11 vergrößert und der Lichtbogen verlängert. Dadurch wird zusätzlich die thermische Energie, welche in die Trenneinrichtung 1 eingebracht wird, vergrößert (siehe Figur 3). Mit einem voranschreiten der Relativbewegung der beiden Schalt abschnitte 13, 14 zueinander, entfernt sich der zweite Schaltabschnitt 14 weiter von dem ersten Schaltabschnitt 13 und wird über den zweiten Lichtbogenfußpunkt 19 gegen das zweite Kontaktmittel 9 gezogen. Aufgrund der vorhandenen Knautschzone 21 erfolgt eine Verformung des zweiten Schaltabschnittes 14 und eine Lagerung desselben im Bereich des zweiten Kontaktmittels 9.

Nunmehr ist die Funkenstrecke 11 in einer nochmals vergrößerten Ausdehnung vorhanden, sodass der brennende Lichtbogen nochmals vergrößert wird (vergleiche Figur 4). Der brennende Lichtbogen trägt weiter Wärme in die Trenneinrichtung 1 hinein und führt zu einer Expansion von Gasen. Diese Gase können beispielsweise auch aus verbrennendem Kunststoffmaterial gewonnen werden. Die expandierenden Gase können zu einer Druckbeaufschlagung der Trenneinrichtung 1 führen, wodurch diese zerstört werden kann. Die thermische Energie des Lichtbogens wird genutzt, um beispielsweise ein irreversibles Zerstören der Trenneinrichtung 1 vorzunehmen. Um eine Druckbeaufschlagung zu unterstützen, weist die Trenneinrichtung 1 beispielsweise ein Gehäuse (in den Figuren 2, 3, 4 nicht gezeigt) auf, welches aufgrund des in seinem Inneren ansteigenden Druckes zerstört wird. In der Folge wird auch die Trenneinrichtung 1 zerstört. So ist in der Erdverbindung von dem Phasenleiter 6 zu dem Erdpotential 7 eine Trennstelle geschaffen. Durch die Trennstelle ist ein unerwünschter Ableitstrom unterbrochen.

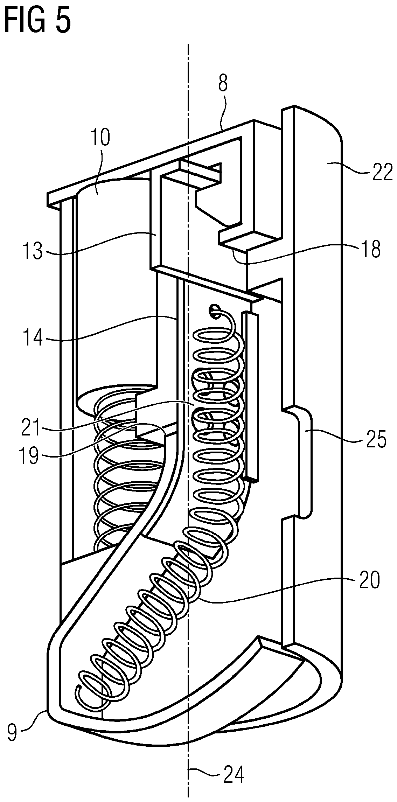

Nachdem anhand der Figuren 1, 2, 3, 4 die Funktionsweise einer Anordnung mit der Überspannungsableiteinrichtung 2 und der Trenneinrichtung 1 beschrieben wurde, soll anhand der Figuren 5,6 und 7 der Aufbau der Trenneinrichtung 1 näher beschrieben werden. Die Figuren 5, 6 und 7 zeigen jeweils eine Ausführungsvariante einer Trenneinrichtung 1.

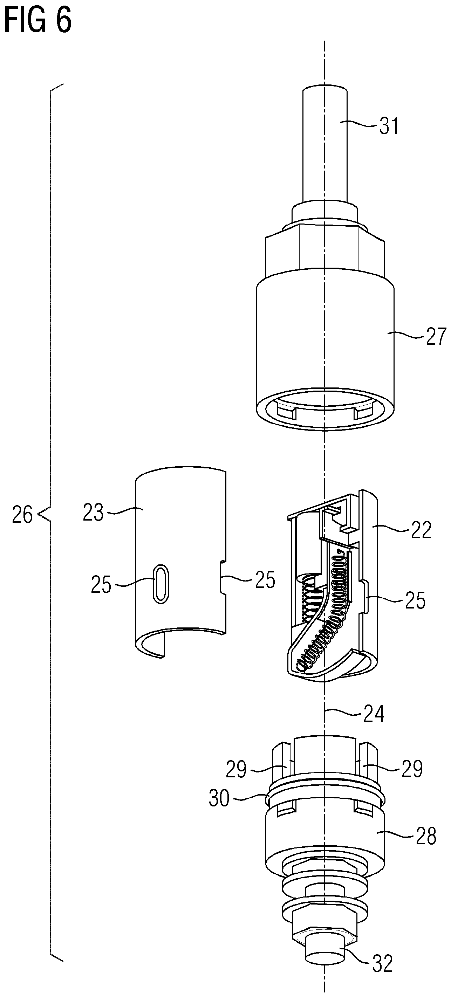

Ausgehend von den Darstellungen der Figuren 2, 3, 4 zeigt die Figur 5 eine perspektivische Ansicht der in den Figuren 2, 3, 4 in Teilen gezeigten Trenneinrichtung 1. In der Figur 5 ist ein erster Gehäuseabschnitt 22 gezeigt, welcher in Form einer Halbschale ausgebildet ist. Der erste Gehäuseabschnitt 22 wird um einen zweiten Gehäuseabschnitt 23 (siehe Figur 6) ergänzt. Die beiden Gehäuseabschnitte 22, 23 sind Teil eines Gehäuses, welches die Baugruppen der Trenneinrichtung 1 relativ zueinander positioniert. Das Gehäuse bzw. die Gehäuseabschnitte 22, 23 sind aus elektrisch isolierendem Material, zum Beispiel Kunststoff, gefertigt. Stirnseitig sind das erste Kontaktmittel 8 sowie das zweite Kontaktmittel 9 in das Gehäuse eingelegt und winkelstarr zueinander positioniert. In der Figur 5 ist zu erkennen, dass das zweite Kontaktmittel 9 einen gewölbten Anpressbereich aufweist, welcher eine elastische Verformung und kontaktieren bei Auftreten einer Anpresskraft in Achsrichtung 24 erlaubt. Das Impedanzelement 10 ist in eine Ausnehmung eingelegt, welche ein Anpressen des Impedanzelement des 10 gegen das erste Kontaktmittel 8 ermöglicht. Weiterhin ist eine Ausnehmung vorgesehen, um eine Anpressfeder zum Aufbringen der Anpresskraft für das Impedanzelement 10 ermöglicht.

In Achsrichtung 24 hintergreifen sich der erste Lichtbogenfußpunkt 18 sowie eine Schulter des ersten Schaltabschnittes 13 unter Zwischenlage eines elektrisch isolierenden Abschnittes des Gehäuses. Somit kann über das Federelement 20 ein Anpressen des ersten Schaltabschnittes 13 gegen das erste Lichtbogenfußpunkt 18 des ersten Kontaktmittels 8 erfolgen. Wie man der Figur 5 entnehmen kann, weist der erste Schaltabschnitt 13 eine gegenüber dem zweiten Schaltabschnitt 14 vergrößerte Wandstärke auf. Darüber hinaus weist der erste Schaltabschnitt 13 gegenüber dem zweiten Schaltabschnitt 14 eine vergrößerte Breite auf. Zusätzlich zum Überlappen von Schultern des ersten Schaltabschnittes 13 sowie des ersten Lichtbogenfußpunktes 18 ist ein seitliches Einlegen des ersten Schaltabschnittes 13 in das Gehäuse bzw. den jeweiligen Gehäuseabschnitt 22, 23 vorgesehen. In der Figur 5 ist weiter erkenntlich, dass in dem zweiten Schaltabschnitt 14 Ausnehmungen eingebracht sind, um die Knautschzone 21 zu bilden. Das Gehäuse umgibt die beiden Pfade 16, 17 mantelseitig nach Art von Halbschalen. In dem Gehäuse sind mantelseitig Kanäle 25 vorgesehen. Über die Kanäle 25 ist der Innenraum, welcher der Aufnahme des Impedanzelementes 10, der Funkenstrecke 11, des thermisch auslösbaren Schaltelementes 12 usw. dient mit seiner Umgebung verbunden

Die Figur 6 basiert auf der Darstellung der Figur 5, wobei ergänzend der zweite Gehäuseabschnitt 23 dargestellt ist, welcher im Wesentlichen in Querrichtung (Fügerichtung) zur Achsrichtung 24 mit dem ersten Gehäuseabschnitt 22 zusammengefügt ist. Aufgrund der Querausrichtung der Fügerichtung zwischen den beiden Gehäuseabschnitte 22, 23, ist in Achsrichtung 24 eine Sicherung der innerhalb des Gehäuses angeordneten Baugruppen an Vorsprünge ermöglicht.

Das Gehäuse wird von einem Überwurf 26 umgriffen (in der Figur 6 in Explosionsdarstellung gezeigt). Der Überwurf weist einen ersten Hülsenabschnitt 27 sowie einen zweiten Hülsenabschnitt 28 auf. Im zusammengesetzten Zustand der beiden Hülsenabschnitt 27, 28, umschließt der Überwurf 26 das Gehäuse mantelseitig vollständig. Ein entstehender Fügespalt kann mit einem reibungsvermindernden Mittel zumindest teilweise befüllt sein. Dieses Mittel erleichtert ein Zusammenfügen und ein Lösen der Hülsenabschnitte 27, 28. Weiterhin kann eine verbesserte Dichtwirkung erzielt werden. Als Mittel können beispielsweise Fette oder Öle genutzt werden. Die beiden Hülsenabschnitt 27, 28 sind mit formkomplementär ausgebildeten Überlappungsabschnitten ausgestattet, sodass die beiden Hülsenabschnitte 27,28 ineinandergreifen können und dabei das Gehäuse nebst darin befindliche Pfaden 16, 17 zu umgreifen und abzuschließen. Um die beiden Hülsenabschnitt des 27, 28 zu sichern, sind am zweiten Hülsenabschnitt 28 Rastnasen vorgesehen. Die Rastnasen dienen einem Eingreifen in formkomplementäre Schultern des ersten Hülsenabschnittes 27. Aufgrund der radialen Verteilung mehrerer Rastnasen am Umfang des zweiten Hülsenabschnittes 28 ist eine Verdrehsicherung gegeben. Ein Verdrehsicherung kann zusätzlich durch Führungsnuten 29 und entsprechende Nutensteine unterstützt werden. Weiterhin ist ein elastisches Dichtelement 30 vorgesehen, welches den Fügespalt zwischen den beiden Hülsenabschnitt 27, 28 dichtet. Das Dichtelement 30 kann mit einem reibungsvermindernden Mittel (wie oben stehend beschrieben) benetzt sein, so dass einerseits die Reibung reduziert und andererseits eine verbesserte Dichtwirkung gegeben ist.

An den voneinander abgewandten Stirnseiten der Hülsenabschnitte 27,28 sind dieselben von elektrisch leitenden Durchsätze 31, 32 durchdrungen und abgeschlossen. Die elektrisch leitenden Durchsätze 31, 32 sind beispielsweise Gewindebolzen mit Bolzenkopf, wobei die Bolzenköpfe jeweils in Richtung des ersten bzw. zweiten Kontaktmittels 8, 9 ausgerichtet sind. Bei einem Zusammenfügen der Hülsenabschnitte 27, 28 zu einem umschließenden Überwurf 26 wird das Gehäuse umschlossenen. Ein zwischen dem Überwurf 26 und dem Gehäuse befindlicher Fügespalt ist über Kanäle 25 mit dem Innenraum des Gehäuses verbunden. Bei einem Auftreten eines Lichtbogens innerhalb des Gehäuses, kann expandiertes Gas über die Kanäle 25 in den Fügespalt hineinströmen. Der dort entstehende Überdruck führt zu einem Weiten des Überwurfes 26 bzw. der Hülsenabschnitte 27, 28. Somit ist ein vereinfachtes Lösen des Überhofes 26 bzw. der Hülsenabschnitt der 27, 28 im Auslösefall ermöglicht.

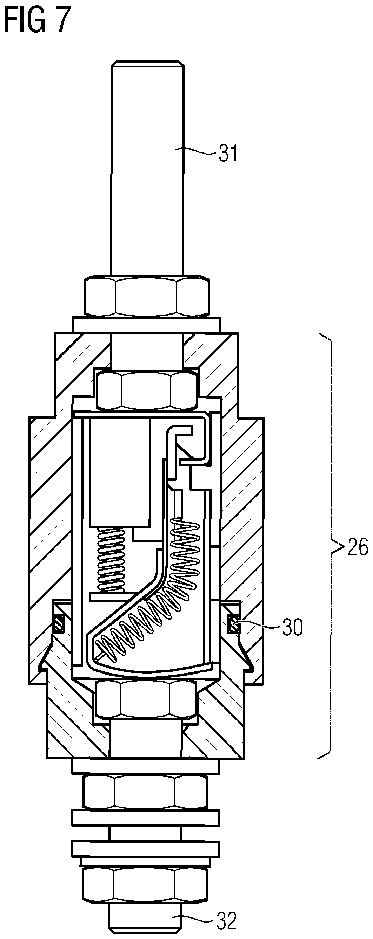

Die Figur 7 zeigt einen Schnitt durch das Ausführungsbeispiel einer Trenneinrichtung 1. Die beiden Hülsenabschnitte 27, 28 sind über Rastverbindungen miteinander verbunden. Ein ringförmiges, in eine Nut eingelegtes elastisches Dichtelement 30 sorgt für ein Abdichten der Hülsenabschnitt 27, 28 gegeneinander. Über die in entgegengesetzter Richtung (bezogen auf Achsrichtung 24) fortragenden Durchsätze 31, 32 ist eine mechanische sowie elektrische Kontaktierung der Trenneinrichtung 1 möglich. Über die im Innern des Überwurfes 26 befindlichen Bolzenköpfe der Durchsätze 31, 32 ist eine jeweilige Kontaktierung durch Anlage an dem ersten Kontaktmittel 8 bzw. an den zweiten Kontaktmittel 9 gegeben. Durch die gewölbte elastisch verformbare Ausgestaltung der Kontaktfläche des zweiten Kontaktmittel 29 können die innerhalb des Gehäuses angeordneten Bauteile über den Kontaktbereich des ersten Kontaktmittels 8 bzw. zweiten Kontaktmittels 9 zwischen den durch Durchsätzen 31, 32 elastisch verspannt und elektrisch kontaktiert werden.

## Patentansprüche

1. Anordnung aufweisend eine Trenneinrichtung (1) für eine Überspannungsableiteinrichtung (2), aufweisend ein erstes Kontaktmittel (8) sowie eine zweites Kontaktmittel (9), zwischen welchen ein erster Pfad (16), ein thermisch auslösbares Schaltelement (12) aufweisend, angeordnet ist, **dadurch gekennzeichnet, dass**
elektrisch parallel zum ersten Pfad (16), ein zweiter Pfad (17), aufweisend ein Impedanzelement (10), zwischen dem ersten sowie dem zweiten Kontaktmittel (13, 14) angeordnet ist, wobei im ersten Pfad (16) eine Funkenstrecke (11) und das thermisch auslösbare Schaltelement (12) in Reihe geschaltet angeordnet sind.

2. Anordnung nach Anspruch 1,
**dadurch gekennzeichnet, dass**
das thermisch auslösbare Schaltelement (12) einen ersten Schaltabschnitt (13) sowie einen zweiten Schaltabschnitt (14) aufweist, welche über eine thermisch auslösbare Sollbruchstelle (15) miteinander elektrisch leitend verbunden sind.

3. Anordnung nach Anspruch 1 oder 2,
**dadurch gekennzeichnet, dass**
zur Aufbringung einer Vorspannkraft ein Federelement (20) genutzt wird, welches den zweiten Schaltabschnitt (14) gegen das zweite Kontaktmittel (9) presst.

4. Anordnung nach Anspruch 3,
**dadurch gekennzeichnet, dass**
die Vorspannkraft auf zumindest einen Schaltabschnitt (13, 14) im Wesentlichen parallel zu einer Achse (24) wirkt, die von dem ersten Kontaktmittel (8) zum zweiten Kontaktmittel (9) verläuft.

5. Anordnung nach einem der Ansprüche 3 oder 4,
**dadurch gekennzeichnet, dass**
der erste Schaltabschnitt (13) unter Zwischenlage eines Isolierabschnittes von dem Federelement (20) gegen das erste Kontaktmittel (8) gepresst ist.

6. Anordnung nach einem der Ansprüche 1 bis 5,
**dadurch gekennzeichnet, dass**
die Anordnung ein Gehäuse mit einem ersten Gehäuseabschnitt (22) und einem zweiten Gehäuseabschnitt (23) aufweist, in welchem das erste Kontaktmittel (8), das zweite Kontaktmittel (9) und das Schaltelement (12) eingelegt sind, wobei eine Fügeachse zwischen erstem Gehäuseabschnitt (22) und zweitem Gehäuseabschnitt (23) im Wesentlichen quer zu einer Achse (24) ausgerichtet ist, die von dem ersten Kontaktmittel (8) zum zweiten Kontaktmittel (9) verläuft.

7. Anordnung nach Anspruch 6,
**dadurch gekennzeichnet, dass**
das Gehäuse von einem Überwurf (26) umgriffen ist, welcher den ersten sowie den zweiten Gehäuseabschnitt (22, 23) relativ zueinander fixiert.

8. Anordnung nach Anspruch 6 oder 7,
**dadurch gekennzeichnet, dass**
der Überwurf (26) das Gehäuse hülsenartig umgreift, wobei ein erster Hülsenabschnitt (27) mit einem zweiten Hülsenabschnitt (28) steckverbindlich zusammengefügt sind.

9. Anordnung nach einem der Ansprüche 7 oder 8,
**dadurch gekennzeichnet, dass**
ein von dem Gehäuse begrenzter Innenraum über zumindest einen Kanal (25) mit einem zwischen Gehäuse und Überwurf (26) befindlichen Fügespalt verbunden ist.

10. Anordnung nach einem der Ansprüche 7 bis 9,
**dadurch gekennzeichnet, dass**
das der erste Hülsenabschnitt (27) einen elektrisch leitenden Durchsatz (31) aufweist, welcher mit dem ersten Kontaktmittel (8) elektrisch leitend verbunden ist und der zweite Hülsenabschnitt (28) einen elektrisch leitenden Durchsatz (32) aufweist, welcher mit dem zweiten Kontaktmittel (9) elektrisch leitend verbunden ist.

11. Anordnung nach einem der Ansprüche 1 bis 10,
**dadurch gekennzeichnet, dass**
der erste Schaltabschnitt (13) eine größere Wandstärke aufweist als der zweite Schaltabschnitt (14).

12. Anordnung nach einem der Ansprüche 1 bis 11,
**dadurch gekennzeichnet, dass**
der erste Schaltabschnitt (13) eine größere Breite aufweist als der zweite Schaltabschnitt (14).

13. Anordnung nach einem der Ansprüche 1 bis 12,
**dadurch gekennzeichnet, dass**
der zweite Schaltabschnitte (14) eine Knautschzone (21), insbesondere in Form einer perforierten Zone aufweist.

14. Anordnung nach einem der Ansprüche 1 bis 13,
**dadurch gekennzeichnet, dass**
das zweite Kontaktmittel (9) einen Lichtbogenfußpunkt (19) aufweist.

15. Anordnung nach einem der Ansprüche 1 bis 14,
**dadurch gekennzeichnet, dass**
das erste Kontaktmittel (8) mit einer Überspannungsableiteinrichtung (2) elektrisch leitend verbunden, insbesondere von dieser getragen ist oder das zweite Kontaktmittel (9) mit einer Überspannungsableiteinrichtung (2) elektrisch leitend verbunden, insbesondere von dieser getragen ist.

16. Anordnung nach einem der Ansprüche 1 bis 15,
**dadurch gekennzeichnet, dass**
das zweite Kontaktmittel (9) mit Erdpotential (7) beaufschlagt ist oder das erste Kontaktmittel (8) mit Erdpotential (7) beaufschlagt ist.

## Claims

1. Assembly comprising a disconnecting device (1) for a surge-arresting device (2), having a first contact means (8) and a second contact means (9), between which a first path (16), having a thermally actuatable switching element (12), is arranged, **characterized in that**
a second path (17) which is electrically parallel to the first path (16), comprising an impedance element (10), is arranged between the first and the second contact means (13, 14), wherein a spark gap (11) and the thermally actuatable switching element (12) are arranged connected in series in the first path (16).

2. Assembly according to Claim 1,
**characterized in that**
the thermally actuatable switching element (12) comprises a first switching section (13) and a second switching section (14), which are mutually connected in an electrically conductive manner via a thermally actuatable rupture joint (15).

3. Assembly according to Claim 1 or 2,
**characterized in that**
for the application of a pre-tensioning force, a spring element (20) is employed, which compresses the second switching section (14) against the second contact means (9).

4. Assembly according to Claim 3,
**characterized in that**
the pre-tensioning force acts on at least one switching section (13, 14) in an essentially parallel direction to an axis (24) which runs from the first contact means (8) to the second contact means (9).

5. Assembly according to one of Claims 3 or 4,
**characterized in that**
the first switching section (13) is compressed by the spring element (20) against the first contact means (8), with the interposition of an insulating section.

6. Assembly according to one of Claims 1 to 5,
**characterized in that**
the assembly comprises a housing having a first housing section (22) and a second housing section (23), in which the first contact means (8), the second contact means (9) and the switching element (12) are accommodated, wherein a joint axis between the first housing section (22) and the second housing section (23) is essentially oriented transversely to an axis (24) running from the first contact means (8) to the second contact means (9).

7. Assembly according to Claim 6,
**characterized in that**
the housing is enclosed by a jacket (26), which secures the first and the second housing sections (22, 23) relative to one another.

8. Assembly according to Claim 6 or 7,
**characterized in that**
the jacket (26) surrounds the housing in the manner of a bushing, wherein a first bushing section (27) is connected to a second bushing section (28) in a plug-in arrangement.

9. Assembly according to one of Claims 7 or 8,
**characterized in that**
an interior space which is delimited by the housing is connected by means of least one channel (25) to a joint gap which is located between the housing and the jacket (26).

10. Assembly according to one of Claims 7 to 9,
**characterized in that**
the first bushing section (27) comprises an electrically conductive through-connection (31), which is connected to the first contact means (8) in an electrically conductive manner, and the second bushing section (28) comprises an electrically conductive through-connection (32), which is connected to the second contact means (9) in an electrically conductive manner.

11. Assembly according to one of Claims 1 to 10,
**characterized in that**
the first switching section (13) assumes a greater wall thickness than the second switching section (14).

12. Assembly according to one of Claims 1 to 11,
**characterized in that**
the first switching section (13) assumes a greater width than the second switching section (14).

13. Assembly according to one of Claims 1 to 12,
**characterized in that**
the second switching section (14) comprises a crumple zone (21), particularly in the form of a perforated zone.

14. Assembly according to one of Claims 1 to 13,
**characterized in that**
the second contact means (9) comprises an arcing root point (19).

15. Assembly according to one of Claims 1 to 14,
**characterized in that**
the first contact means (8) is connected to a surge-arresting device (2) in an electrically conductive manner and, in particular, is carried by the latter, or the second contact means (9) is connected to a surge-arresting device (2) in an electrically conductive manner and, in particular, is carried by the latter.

16. Assembly according to one of Claims 1 to 15,
**characterized in that**
the second contact means (9) is energized with a ground potential (7), or the first contact means (8) is energized with a ground potential (7).

## Revendications

1. Système comprenant un dispositif (1) de séparation pour un dispositif (2) de dérivation de la surtension, comportant un premier moyen (8) de contact et un deuxième moyen (9) de contact, entre lesquels est disposé un premier chemin (16), comportant un élément (12) de coupure pouvant être déclenché thermiquement, **caractérisé en ce que**,
en parallèle électriquement avec le premier chemin (16), un deuxième chemin (17), comportant un élément (10) d'impédance, est disposé entre le premier ainsi que le deuxième moyens (13, 14) de contact, dans lequel, dans le premier chemin (16), sont montés en série un éclateur (11) et l'élément (12) de coupure pouvant être déclenchés thermiquement.

2. Système suivant la revendication 1,
**caractérisé en ce que**
l'élément (12) de coupure pouvant être déclenché thermiquement a une première partie (13) de coupure ainsi qu'une deuxième partie (14) de coupure, qui sont reliées entre elles d'une manière conductrice de l'électricité, en passant par un point (15) destiné à se rompre pouvant être déclenché thermiquement.

3. Système suivant la revendication 1 ou 2,
**caractérisé en ce que**,
pour appliquer une force de précontrainte, on utilise un élément (20) de ressort, qui presse la deuxième partie (14) de coupure sur le deuxième moyen (9) de contact.

4. Système suivant la revendication 3,
**caractérisé en ce que**
la force de précontrainte s'applique à au moins une partie (13, 14) de coupure sensiblement parallèlement à un axe (24), qui s'étend du premier moyen (8) de contact au deuxième moyen (9) de contact.

5. Système suivant l'une des revendications 3 ou 4,
**caractérisé en ce que**
la première partie (13) de coupure est pressée, avec interposition d'une partie isolante, sur le premier moyen (8) de contact par l'élément (20) de ressort.

6. Système suivant l'une des revendications 1 à 5,
**caractérisé en ce que**
le système a un boîtier ayant une première partie (22) de boîtier et une deuxième partie (23) de boîtier, dans laquelle le premier moyen (8) de contact, le deuxième moyen (9) de contact et l'élément (12) de coupure sont insérés, dans lequel un axe d'assemblage entre la première partie (22) du boîtier et la deuxième partie (23) du boîtier est dirigé sensiblement transversalement à un axe (24), qui s'étend du premier moyen (8) de contact au deuxième moyen (9) de contact.

7. Système suivant la revendication 6,
**caractérisé en ce que**
le boîtier est serré par un manteau (26), qui fixe la première ainsi que la deuxième partie (22, 23) du boîtier l'une par rapport à l'autre.

8. Système suivant la revendication 6 ou 7,
**caractérisé en ce que**
le manteau (26) entoure le boîtier à la manière d'un manchon, dans lequel une première partie (27) du manchon est assemblée ensemble, à jonction par enfichage, avec une deuxième partie (28) du manchon.

9. Système suivant l'une des revendications 7 ou 8,
**caractérisé en ce que**
un espace intérieur délimité par le boîtier communique, en passant par au moins un conduit (25), avec une fente d'assemblage se trouvant entre le boîtier et le manteau (26).

10. Système suivant l'une des revendications 7 à 9,
**caractérisé en ce que**
la première partie (27) du manchon a un passage (31) conducteur de l'électricité, qui est connecté d'une manière conductrice de l'électricité au premier moyen (8) de contact, et la deuxième partie (28) du manchon a un passage (32) conducteur de l'électricité, qui est connecté d'une manière conductrice de l'électricité au deuxième moyen (9) de contact.

11. Système suivant l'une des revendications 1 à 10,
**caractérisé en ce que**
la première partie (13) de coupure a une épaisseur de paroi plus grande que la deuxième partie (14) de coupure.

12. Système suivant l'une des revendications 1 à 11,
**caractérisé en ce que**
la première partie (13) de coupure a une largeur plus grande que la deuxième partie (14) de coupure.

13. Système suivant l'une des revendications 1 à 12,
**caractérisé en ce que**
la deuxième partie (14) de coupure a une zone (21) de froissement, en particulier sous la forme d'une zone perforée.

14. Système suivant l'une des revendications 1 à 13,
**caractérisé en ce que**
le deuxième moyen (9) de contact a un pied (19) d'arc électrique.

15. Système suivant l'une des revendications 1 à 14,
**caractérisé en ce que**
le premier moyen (8) de contact est connecté d'une manière conductrice de l'électricité à un dispositif (2) de dérivation de la surtension, en étant en particulier porté par celui-ci, ou **en ce que** le deuxième moyen (9) de contact est connecté d'une manière conductrice de l'électricité à un dispositif (2) de dérivation de la surtension, en étant en particulier porté par celui-ci.

16. Système suivant l'une des revendications 1 à 15,
**caractérisé en ce que**
le deuxième moyen (9) de contact est mis au potentiel (7) de terre ou le premier moyen (8) de contact est mis au potentiel (7) de terre.
